# EUROPÄISCHE PATENTSCHRIFT

(11) **EP 1 319 585 B1**
(45) Veröffentlichungstag und Bekanntmachung des Hinweises auf die Patenterteilung: **21.02.2007**
(21) Anmeldenummer: 02025028.8
(22) Anmeldetag: 11.11.2002
(51) Int. Cl.: B62D 35/02

(54) **Kraftfahrzeug mit einer eine Luftleiteinrichtung umfassenden Frontpartie**
Motor vehicle with a air guiding device at its front
Véhicule automobile avec un dispositif de guidage de l'air à l'avant

(30) Priorität: 11.12.2001 DE 10160748
(43) Veröffentlichungstag der Anmeldung: 18.06.2003
(73) Patentinhaber: Dr.Ing. h.c.F. Porsche Aktiengesellschaft, 70435 Stuttgart (DE); Prospective Concepts AG, 8152 Glattbrugg (CH)
(72) Erfinder: Soja, Heinz, 71263 Weil der Stadt (DE); Fröschle, Mathias, 73760 Ostfildern (DE); Landolt, Andrin, 8708 Männedorf (CH)

(56) Entgegenhaltungen:
- DE-A- 3 613 301
- DE-A- 3 630 645
- DE-A- 4 209 164
- FR-A- 1 338 277
- US-B1- 6 199 796

## Beschreibung

Die Erfindung geht aus von einem Kraftfahrzeug mit einer eine Luftleiteinrichtung umfassenden Frontpartie, gemäß Oberbegriff des Anspruchs 1.

Ein gattungsbildendes Kraftfahrzeug ist aus der DE 36 30 645 A1 bekannt. Es besitzt eine Frontpartie, an der eine Luftleiteinrichtung befestigt ist, die ein pneumatisches Betätigungselement aufweist, um die Luftleiteinrichtung aus einer Ruhestellung in eine ausgefahrene Wirkstellung zu verlagern. Das pneumatische Element trägt das als Verstärkungsplatte ausgeführte Spoilerelement und ist als aufblasbarer Hohlkörper realisiert, der in aufgeblasenem Zustand die Luft am Fahrzeug so leitet, dass bei höheren Geschwindigkeiten die Bodenhaftung erhöht und gleichzeitig der Luftwiderstandsbeiwert des Fahrzeugs reduziert werden soll. Sowohl das Spoilerelement als auch der Hohlkörper können elastisch ausgeführt sein und ferner mit Dehnfalten versehen sein, die parallel zur Fahrtrichtung verlaufen.

Es ist daher Aufgabe der Erfindung, ein Kraftfahrzeug der eingangs genannten Art zu schaffen, dessen Luftleiteinrichtung hinsichtlich der aerodynamischen Wirkung optimiert ist.

Gelöst wird diese Aufgabe mit einem Kraftfahrzeug, welches die in Anspruch 1 genannten Merkmale aufweist. Weitere, die Erfindung ausgestaltende Merkmale sind in den Unteransprüchen angegeben.

Die mit der Erfindung hauptsächlich erzielten Vorteile sind darin zu sehen, dass durch die vor dem pneumatischen Betätigungselement angeordnete und in Wirkstellung verlagerte Spoilerlippe das pneumatische Betätigungselement beispielsweise während der Fahrt des Kraftfahrzeugs vor Steinschlag oder vor einer Beschädigung beim Überfahren eines Gegenstandes geschützt ist. Auch in eingefahrener Stellung bzw. Ruhestellung der Luftleiteinrichtung ist das pneumatische Betätigungselement von der elastischen Spoilerlippe abgedeckt, so dass auch hier ein Schutz, beispielsweise vor Verschmutzung, gegeben ist. Dadurch, dass die dehnbare und elastische Spoilerlippe in Ruhestellung unter Vorspannung liegt und dabei an die Frontpartie angelegt bzw. nahezu angelegt wird, wird sie beim Ausfahren weiter vorgespannt bzw. gedehnt, wodurch eine Rückstellkraft aufgebaut wird und sich so bei einer Druckentlastung des Schlauches ein automatisches Rückstellen der Spoilerlippe in Ruhestellung einstellt. Vorteilhaft ist außerdem, dass die Spoilerlippe durch die Vorspannung sicher in Ruhestellung gehalten und dabei während der Fahrt nicht flattert. Der in Fahrzeugquerrichtung elastisch dehnbare Schlauch kann die Spoilerlippe gleichmäßig abstützen und in Wirkstellung zusätzliche Rückstellkraft bereitstellen. Bezüglich des Querschnitts ist der Schlauch nicht dehnbar, wodurch die der Spoilerlippe durch die Querschnittsform des Schlauches aufgeprägte aerodynamische Kontur nicht beeinflusst wird.

Bei einer Weiterbildung mit den in Anspruch 2 genannten Merkmalen ist vorteilhaft, dass der Spoilerlippe in Wirkstellung eine aerodynamisch vorteilhafte Kontur aufgeprägt wird. Zusätzlich oder alternativ kann gemäß einer Weiterbildung mit den in Anspruch 3 angegebenen Merkmalen die aerodynamische Kontur der Spoilerlippe weiter beeinflusst werden. Sind mehrere Kammern vorgesehen, können diese gemäß Anspruch 4 tropfenförmig ausgebildet sein. Der Schlauch bzw. die Kammern könnten alternativ im Querschnitt oval oder etwa kreisförmig sein.

Bei einem Ausführungsbeispiel gemäß Anspruch 5 kann durch die unterschiedliche Größe der Kammern Einfluss auf die aerodynamische Kontur der Spoilerlippe in Wirkstellung genommen werden.

Eine besonders günstige aerodynamische Kontur der Spoilerlippe kann mit den Merkmalen des Anspruchs 6 erreicht werden. Eine weitere Alternative für die Formgebung der Spoilerlippe in Wirkstellung ist in Anspruch 7 angegeben.

Bei einem Ausführungsbeispiel mit den in Anspruch 8 genannten Merkmalen ist vorteilhaft, dass sämtliche Kammern von einer Luftquelle versorgt werden können. Eine Alternative ist in Anspruch 9 angegeben, die insofern vorteilhaft ist, dass bei einer undichten Kammer die übrigen, funktionsfähigen Kammern aktiviert werden können, so dass eine Notfunktion der Luftleiteinrichtung mit den intakten Kammern möglich ist.

Um der Luftleiteinrichtung in Wirkstellung eine höhere Festigkeit zu geben, sind die Kammern gemäß Anspruch 10 aneinander befestigt oder weisen einen Materialfortsatz auf, mit dem sie an der Unterseite der Frontpartie gehalten werden.

Ein besonders bevorzugtes Ausführungsbeispiel gemäß Anspruch 11 zeichnet sich dadurch aus, dass eine Überhitzung der vorderen Radbremsen vermieden wird, wenn in der Spoilerlippe Belüftungsöffnungen vorgesehen sind.

Werden die Belüftungsöffnungen in ihrem Randbereich verstärkt, wie dies Anspruch 12 vorschlägt, weist die Spoilerlippe in Wirkstellung eine hohe Steifigkeit auf.

Ein Rückstellen der in Wirkstellung verlagerten Spoilerlippe wird gemäß einer Ausgestaltung entsprechend Anspruch 13 unterstützt. Das in der Tasche angeordnete biegeelastische Element versteift die Spoilerlippe außerdem in Wirkstellung und stützt die Spoilerlippe im Bereich unterhalb der Belüftungsöffnungen, in welchem Bereich der Schlauch bzw. die Kammern ausgespart sein können.

Gemäß einer Weiterbildung mit den Merkmalen des Anspruchs 14 wird die in Ruhestellung vorliegende Spoilerlippe in einer Ausnehmung der Frontpartie versenkt, so dass dabei die Bodenfreiheit des Fahrzeugs im Bereich der Frontpartie nicht beeinträchtigt ist.

Als besonders günstig hat sich die aus dem elastischen Material hergestellten Spoilerlippe bei einer Frontpartie herausgestellt, die - in Fahrtrichtung gesehen - ausgewölbt ist, wie in Anspruch 15 angegeben. Die elastische Spoilerlippe kann sich an die gewölbte Form leicht anpassen.

Bevorzugt wird eine Ausführungsform nach Anspruch 17, bei der in Abhängigkeit der Fahrgeschwindigkeit des Kraftfahrzeugs die Spoilerlippe in Wirkstellung verlagert bzw. aus der Wirkstellung in Ruhestellung zurück verlagert wird. Insbesondere bei niedrigen Geschwindigkeiten ist die Spoilerlippe in Ruhestellung, so dass beispielsweise beim Einparken des Kraftfahrzeugs eine Beschädigung der Spoilerlippe an einem Bordstein vermieden wird.

Gemäß Anspruch 18 ist in einer Ausführungsvariante vorgesehen, die Spoilerlippe und den Schlauch einstückig auszubilden, wodurch sich eine einfache Herstellung der Luftleiteinrichtung ergibt. Außerdem tritt beim Bewegen der einstückigen Luftleiteinrichtung keine Reibung zwischen Spoilerlippe und pneumatischem Element auf.

Nach einer bevorzugten Ausführungsform entsprechend Anspruch 20 wird das pneumatische Element vor Schmutz und Beschädigung geschützt.

Die Erfindung wird nachfolgend anhand von Ausführungsbeispielen mit Bezug auf die Zeichnung näher erläutert.

Es zeigen:
- Fig. 1: ausschnittweise eine Frontpartie eines Kraftfahrzeugs mit einer in Ruhstellung liegenden Luftleiteinrichtung,
- Fig. 2: die Frontpartie gemäß Fig. 1 mit in Wirkstellung ausgefahrener Luftleiteinrichtung entsprechend einem ersten Ausführungsbeispiel,
- Fig. 3: einen Schnitt durch die Luftleiteinrichtung entsprechend Linie III - III in Fig. 2 und
- Fig. 4: in Schnittansicht eine Luftleiteinrichtung nach einem zweiten Ausführungsbeispiel.

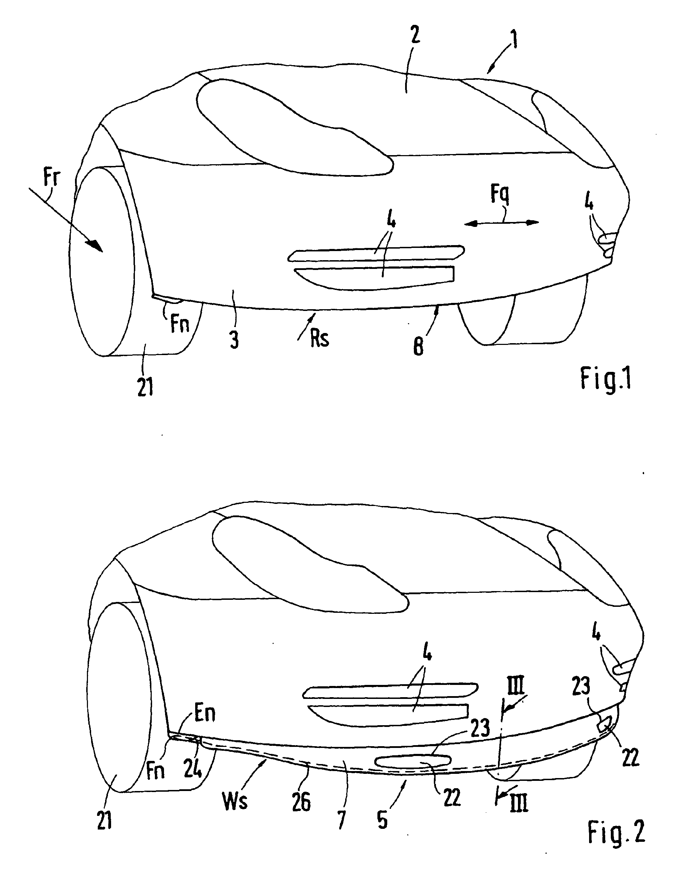

Die Fig. 1 zeigt ausschnittweise ein Kraftfahrzeug 1, insbesondere Personenwagen, mit einer Frontpartie 2, die ein Bugverkleidungsteil 3 aufweist, hinter dem ein hier nicht zu sehender Stoßfängerquerträger angeordnet sein kann. In das Bugverkleidungsteil 3 können mehrere Kühleröffnungen 4 eingebracht sein, hinter denen Wärmetauscher bzw. Kühleinrichtungen für den Antriebsmotor des Fahrzeugs 1 anordenbar sind. Gemäß Fig. 2 ist die Frontpartie 2 mit einer Luftleitvorrichtung 5 ausgestattet, die in ihrer ausgefahrenen Wirkstellung Ws in Fig. 2 dargestellt ist und in Fig. 1 in ihrer eingefahren Ruhestellung Rs unter der Frontpartie 2 liegt und dort deshalb nicht zu sehen ist.

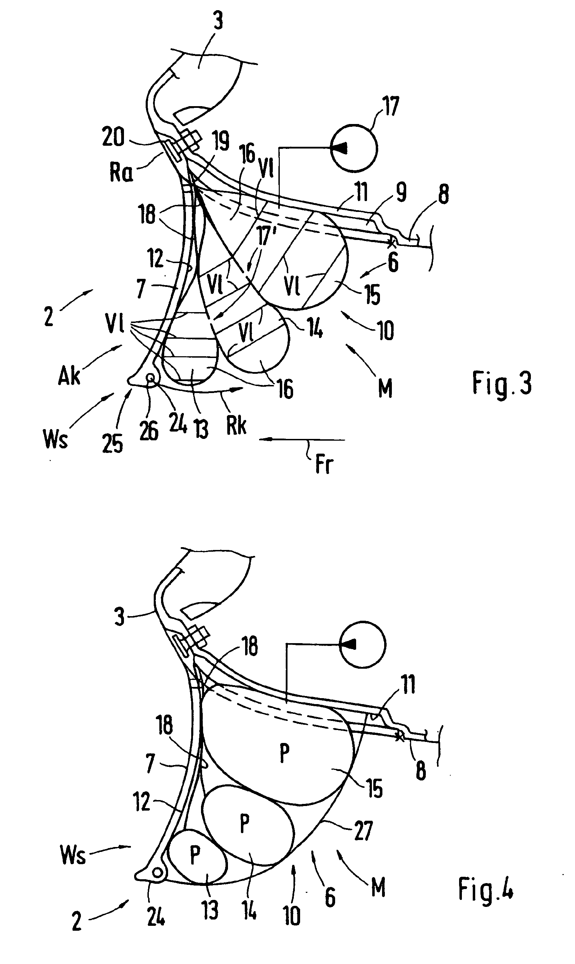

Anhand der Fig. 2 und 3 wird die Luftleiteinrichtung 5 im folgenden näher beschrieben: Die Luftleiteinrichtung 5 besitzt ein pneumatisches Betätigungselement 6, mit welchem eine als Streifen ausgebildete Spoilerlippe 7 der Luftleiteinrichtung 5 in die etwa vertikale Wirkstellung Ws verlagert bzw. ausgefahren werden kann. Die Spoilerlippe 7 ist aus einem dehnbaren und elastischen Material, beispielsweise Gummi oder dgl., hergestellt und liegt in ihrer Ruhestellung Rs etwa in horizontaler Lage unter der Frontpartie 2, insbesondere an der Unterseite 8 des Bugverkleidungsteils 3 an. Die Spoilerlippe ist mit ihrem Rand Ra an der Frontpartie 2 befestigt. In Ruhestellung Rs kann das pneumatische Betätigungselement 6 sowie die Spoilerlippe 7 in einer an der Unterseite 8 des Bugverkleidungsteils 3 vorgesehenen Ausnehmung 9 versenkt werden, wobei sich die Ausnehmung 9 über die nahezu gesamte Breite, also in Fahrzeugquerrichtung Fq, des Bugverkleidungsteils 3 erstrecken kann. Das pneumatische Betätigungselement 6 ist als aufblasbarer Schlauch 10 ausgebildet, der - in Fahrtrichtung Fr gesehen - hinter der Spoilerlippe 7 angeordnet ist und sich über die nahezu gesamte Breite des Bugverkleidungsteils 3 bzw. der Spoilerlippe 7 erstreckt. Dadurch, dass die Spoilerlippe 7 aus einem dehnbaren und elastischen Material hergestellt ist, kann sie in ihrer Ruhestellung Rs vorgespannt werden. Diese Vorspannung der Spoilerlippe kann durch die Formgebung der Spoilerlippe 7 im nicht eingebauten Zustand bzw. bei der Herstellung der Spoilerlippe 7 erreicht werden. Die Vorspannung könnte zusätzlich oder alternativ durch entsprechendes Montieren unter Vorspannung der Spoilerlippe 7 an der Frontpartie 2 aufgebracht werden. Unabhängig davon, wie die Vorspannung erzielt wird, verläuft ihre Wirkrichtung zur Unterseite 8 hin, so dass die Spoilerlippe 7 in Ruhestellung Rs an das Bugverkleidungsteil 3 bzw. die Frontpartie 2 angelegt wird. Die Spoilerlippe 7 wird bei Verlagerung von der Ruhestellung Rs in die Wirkstellung Ws gedehnt, so dass dadurch eine Rückstellkraft Rk aufbaut wird, die bei Druckentlastung des aufblasbaren Schlauchs 10 diesen zwischen dem Grund 11 der Ausnehmung 9 und der Rückseite 12 der Spoilerlippe 7 zusammen drückt, wodurch der Schlauch 10 entleert und in Ruhestellung Rs zusammengefaltet wird.

Aus Fig. 3 geht hervor, dass der Schlauch 10 mehrere übereinander angeordnete Kammern 13, 14 und 15 aufweist, die entgegen der Fahrtrichtung Fr versetzt zueinander angeordnet sind. Die Kammern 13 bis 15 besitzen außerdem - im Querschnitt gesehen - eine unterschiedliche Größe, wobei die Kammer 13, die benachbart zu der Spoilerlippe 7 liegt, eine geringeren Querschnitt bzw. eine geringere Größe als die beiden übrigen Kammern 14 und 15 aufweist. Die der Frontpartie 2 bzw. dem Bugverkleidungsteil 3 benachbarte Kammer 15 besitzt hingegen den größten Querschnitt. Der Querschnitt wenigstens einer der Kammer 13 bis 15, vorzugsweise jedoch aller Kammern 13, 14, 15, ist tropfenförmig, wobei die oberen Kammerenden 16 nebeneinander liegen, so dass - im Gesamtquerschnitt des Schlauches 10 gesehen - sich ein etwa kreissektorförmiger, insbesondere viertelkreissektorförmiger, Querschnitt ergibt. Durch die Wahl des Querschnitts der Kammern 13 bis 15 wird die aerodynamische Kontur Ak der Spoilerlippe 7 beeinflusst. Im gezeigten Ausführungsbeispiel ist Kontur die Ak entgegen der Fahrtrichtung Fr gewölbt ausgewählt, und die Spoilerlippe 7 folgt der ausgewölbten Form der Frontpartie 2. Die Tropfenform der Kammern 13 bis 15 kann durch innerhalb der Kammern 13 bis 15 angeordnete und mit der Innenwand der Kammern 13 bis 15 verbundene, streifenförmige Formgebungslaschen VI erreicht werden, die die gefüllten Kammern in die gewünschte Form bringen. Je Kammer 13, 14 oder 15 wird wenigstens eine Formgebungslasche VI vorgesehen.

Um den Schlauch 10 mit Luft zu füllen und so die Spoilerlippe 7 in ihre Wirkstellung Ws zu verlagern, kann eine Pumpe 17 vorgesehen sein, die mit dem Schlauch 10 verbunden ist. Damit jede Kammer 13 bis 15 gefüllt werden kann, sind vorzugsweise zwischen zwei benachbart liegenden Kammern 13 und 14 bzw. 14 und 15 Luftverbindungen 17' vorgesehen. Ein separater Anschluss an jeder Kammer 13 bis 15 könnte an Stelle der Luftverbindungen ausgebildet werden, wobei jeder Anschluss über eine Ventileinrichtung zur Pumpe 17 geführt sein kann, um beispielsweise eine der Kammern nicht mit Luft zu versorgen, wenn diese undicht sein sollte. Außerdem können die Kammern 13 bis 15 aneinander befestigt sein. Alternativ oder zusätzlich kann für die Befestigung der Kammern 13 bis 15 an dem Bugverkleidungsteil 3 an jedem Kammerende 16 ein Materialfortsatz 18 angebracht sein, dessen Ende 19 zwischen dem bugverkleidungsteilseitigen Ende 20 der Spoilerlippe 7 und dem Bugverkleidungsteil 3 durch Klemmung gehalten werden, so dass die Kammern übereinander gehalten werden. Die Spoilerlippe 7 kann zum Beispiel durch eine Schraub- oder Klipsverbindung an dem Bugverkleidungsteil 3 befestigt werden.

Um die hier nicht dargestellten Bremsen der Vorderräder 21 ausreichend mit Kühlluft versorgen zu können, wenn die Luftleiteinrichtung 5 in Wirkstellung Ws liegt, sind in die Spoilerlippe 7 ein oder mehrere Belüftungsöffnungen 22 eingebracht, die beispielsweise mit einem in Fahrzeugquerrichtung Fq gemessenen Abstand zueinander liegen, so dass zumindest eine Belüftungsöffnung 22 jeweils einem Vorderrad 21 zugeordnet ist. Um die Steifigkeit der Spoilerlippe 7 durch die Belüftungsöffnungen nicht zu beeinflussen, kann der Randbereich 23 jeder Öffnung 22 verstärkt werden. Für diese Verstärkung kann beispielsweise ein Kunststoffrahmen oder dgl. vorgesehen sein. Sind die Belüftungsöffnungen 22 in die Spoilerlippe 7 eingebracht, werden vorzugsweise mehrere Schläuche 10 in Reihe mit Abstand dazwischen nebeneinander, also über die Breite der Spoilerlippe 7 verteilt angeordnet, so dass die Belüftungsöffnungen 22 nicht verschlossen sind.

Beim Ausfahren der Spoilerlippe 7 in Wirkstellung Ws wird die Lippe 7 gedehnt, wodurch die Rückstellkraft Rk aufgebaut wird, die durch ein an der Spoilerlippe 7 gehaltenes biegeelastisches Element 24 verstärkt werden kann. Das Element 24 kann beispielsweise an dem freien Ende 25 der Spoilerlippe in eine Tasche 26 eingelegt sein. Bei dem biegeelastischen Element 24 handelt es sich beispielsweise um einen Kunststoffstab, der faserverstärkt sein kann. Das biegeelastische Element 24 erstreckt sich vorzugsweise über die gesamte Breite der Frontpartie 2 bzw. des Bugverkleidungsteils 3, wie dies gestrichelt in Fig. 2 angedeutet ist. Weil die Spoilerlippe 7 beim Verlagern in Wirkstellung Ws gedehnt wird, ist das Element 24 lose bzw. in Fahrzeugquerrichtung Fq verschiebbar in der Tasche 26 angeordnet. Die seitlichen Enden En des Elements 24 sind in seitlichen Führungen Fn verschiebbar geführt, wodurch diese Enden beim Bewegen der Spoilerlippe 7 in Wirkstellung Ws bereichsweise aus den Führungen Fn herausgezogen werden. Wird das stabförmige Element 24 unter Biegen vorgespannt und so in seine Führungen Fn eingesetzt, wird die Vorspannung der Spoilerlippe 7 unterstützt. Denkbar ist es auch, die Vorspannung für die Spoilerlippe 7 ausschließlich durch das vorgespannte Element 24 bereitzustellen.

Die Tasche 26 und die Spoilerlippe 7 sind vorzugsweise einstückig hergestellt. Außerdem ist es möglich, durch Anspritzen der Spoilerlippe 7 an das pneumatische Betätigungselement 6 die Luftleiteinrichtung 5 als vorgefertigtes Modul M bereit zu stellen, das an dem Bugverkleidungsteil 3 befestigt wird. Denkbar wäre es, den Schlauch 10 bzw. die Kammern 13 bis 15 zumindest abschnittweise aus einem Textilstoff herzustellen, der anschließend mit dem dehnbaren und elastischen Material für die Spoilerlippe 7 versehen, beispielsweise umspritzt wird, so dass die Spoilerlippe mit ausgebildet wird.

Bei einem bevorzugten Ausführungsbeispiel wird der Schlauch 10 bzw. zumindest eine der Kammern 13 bis 15, insbesondere die Kammer 13, - in Fahrzeugquerrichtung Fq gesehen - elastisch dehnbar ausgebildet, so dass sie in Wirkstellung Ws der nach außen gewölbten Kontur des Bugverkleidungsteil 3 folgen können. In radialer Richtung ist der Schlauch 10 bzw. sind die Kammern 13 bis 15 jedoch undehnbar ausgebildet, so dass sie unabhängig von dem in dem Schlauch 10 bzw. den Kammern 13 bis 15 herrschenden Luftdruck in ihrem Querschnitt nicht aufweitbar sind. Dadurch wird in Wirkstellung Ws eine ausreichende Steifigkeit des pneumatischen Betätigungselements 6 erreicht.

Das in Fig. 4 gezeigte Ausführungsbeispiel einer Luftleiteinrichtung 2 unterscheidet sich von der in Fig. 3 dargestellten Luftleiteinrichtung 2 lediglich durch ein abgewandeltes pneumatisches Element 6. Der Querschnitt der Kammern 13 bis 15 ist hier oval oder etwa kreisförmig gewählt, welcher Querschnitt sich dann durch den in den Kammern 13 bis 15 herrschenden Luftdruck p und in Abhängigkeit des zwischen der Rückseite 12 und der Unterseite 8 vorhandenen Raums einstellt. Ferner ist der Luftleiteinrichtung 2 ein Schutzelement 27 zugeordnet, das sich vom freien Ende 24 bis zur Unterseite 8 und über die in Fahrzeugquerrichtung Fq gesehene Breite des Elements 6 erstreckenden kann. Das Schutzelement 27 kann einstückig mit der Spoilerlippe 7 und/oder dem Element 6 hergestellt und beispielsweise von dem Textilstoff der Kammern 13 bis 15 gebildet oder an diesem befestigt sein.

## Patentansprüche

1. Kraftfahrzeug (1) mit einer eine Luftleiteinrichtung (5) umfassenden Frontpartie (2), welche Luftleiteinrichtung (5) ein pneumatisches Betätigungselement (6) aufweist, um die Luftleiteinrichtung (5) aus einer Ruhestellung (Rs) in eine Wirkstellung (Ws) zu verlagern, und welche Luftleiteinrichtung (5) eine ein dehnbares und elastisches Material umfassende Spoilerlippe (7) aufweist, wobei das pneumatische Betätigungselement (6) als - in Fahrtrichtung (Fr) gesehen - hinter der Spoilerlippe (7) angeordneter, aufblasbarer Schlauch (10) ausgebildet ist und wobei die elastische Spoilerlippe (7) in ihrer Ruhestellung (Rs) unter Vorspannung an der Frontpartie anliegt, **dadurch gekennzeichnet, dass** der Schlauch (10) - in Fahrzeugquerrichtung (Fq) gesehen - elastisch dehnbar und im Querschnitt im Wesentlichen nicht dehnbar ausgebildet ist.

2. Kraftfahrzeug nach Anspruch 1, **dadurch gekennzeichnet, dass** der Schlauch (10) mehrere übereinander angeordnete Kammern (13, 14, 15) aufweist, die - entgegen der Fahrtrichtung (Fr) gesehen - versetzt zueinander angeordnet sind.

3. Kraftfahrzeug nach Anspruch 1, **dadurch gekennzeichnet, dass** der Luftschlauch (10) - im Querschnitt gesehen - tropfenförmig, oval oder kreisförmig ausgebildet ist.

4. Kraftfahrzeug nach Anspruch 2, **dadurch gekennzeichnet, dass** zumindest eine der Kammern (13, 14, 15) - im Querschnitt gesehen - tropfenförmig, oval oder kreisförmig ausgebildet ist.

5. Kraftfahrzeug nach Anspruch 2 oder 4, **dadurch gekennzeichnet, dass** die Kammern (13, 14, 15)- im Querschnitt gesehen - eine unterschiedliche Größe aufweisen.

6. Kraftfahrzeug nach Anspruch 5, **dadurch gekennzeichnet, dass** die zu der Spoilerlippe (7) benachbart liegende Kammer (13) den geringsten Querschnitt aufweist.

7. Kraftfahrzeug nach Anspruch 5, **dadurch gekennzeichnet, dass** die zu der Frontpartie (2) benachbart liegende Kammer (15) den größten Querschnitt aufweist.

8. Kraftfahrzeug nach Anspruch 2, 4 oder 5, **dadurch gekennzeichnet, dass** die Kammern (13, 14, 15) eine Luftverbindung (17) zueinander aufweisen.

9. Kraftfahrzeug nach Anspruch 2, 4 oder 5, **dadurch gekennzeichnet, dass** jede Kammer (13, 14, 15) separat mit Luft versorgt wird.

10. Kraftfahrzeug nach Anspruch 2, 4, 5, 8 oder 9, **dadurch gekennzeichnet, dass** die Kammern (13, 14, 15) aneinander befestigt sind oder durch wenigstens einen Materialfortsatz (18) der Kammern (13, 13, 15) übereinander unter der Frontpartie (2) gehalten werden.

11. Kraftfahrzeug nach Anspruch 1, **dadurch gekennzeichnet, dass** die Spoilerlippe (7) - in Fahrzeugquerrichtung (Fq) gesehen - beabstandet zueinander angeordnete Belüftungsöffnungen (22) für die Luftzufuhr der Radbremsen aufweist.

12. Kraftfahrzeug nach Anspruch 11, **dadurch gekennzeichnet, dass** die Belüftungsöffnungen (22) in ihren Randbereichen (23) verstärkt sind.

13. Kraftfahrzeug nach Anspruch 1, **dadurch gekennzeichnet, dass** die Spoilerlippe (7) an ihrem freien Ende (25) eine Tasche (26) aufweist, in der ein sich im Wesentlichen über die gesamte Breite der Frontpartie (2) erstreckendes, biegeelastisches Element (24) angeordnet ist, welches in der Tasche (26) in Fahrzeugquerrichtung (Fq) verschiebbar ist.

14. Kraftfahrzeug nach Anspruch 1 oder 13, **dadurch gekennzeichnet, dass** die Frontpartie (2) eine sich über die Breite der Frontpartie (2) erstreckende Ausnehmung (9) aufweist, in der der Schlauch (10) und die Spoilerlippe (7) in Ruhestellung (Rs) liegen.

15. Kraftfahrzeug nach Anspruch 1, 13 oder 14, **dadurch gekennzeichnet, dass** die Frontpartie (2) - in Fahrtrichtung (Fr) gesehen - ausgewölbt ist.

16. Kraftfahrzeug nach Anspruch 1, **dadurch gekennzeichnet, dass** die Luftleiteinrichtung (5) an der Unterseite (8) der Frontpartie (2) angeordnet ist.

17. Kraftfahrzeug nach Anspruch 1, **dadurch gekennzeichnet, dass** die Luftleiteinrichtung (5) in Abhängigkeit der Fahrgeschwindigkeit des Kraftfahrzeugs (1) in Wirkstellung (Ws) und zurück in Ruhestellung (Rs) und umgekehrt verlagerbar ist.

18. Kraftfahrzeug nach Anspruch 1 oder 2, **dadurch gekennzeichnet, dass** die Spoilerlippe (7) und der Schlauch (10) bzw. die Kammern (13, 14, 15) einstückig hergestellt sind und so ein vorgefertigtes Modul (M) bilden.

19. Kraftfahrzeug nach einem der vorhergehenden Ansprüche 2 bis 18, **dadurch gekennzeichnet, dass** zumindest eine der Kammern (13, 14, 15) - in Fahrzeugquerrichtung (Fq) gesehen - elastisch dehnbar und im Querschnitt im Wesentlichen nicht dehnbar ausgebildet ist.

20. Kraftfahrzeug nach Anspruch 1 oder 16, **dadurch gekennzeichnet, dass** sich zwischen der Rückseite (12) der Spoilerlippe (7) und der Unterseite (8) der Frontpartie (2) ein Schutzelement (27) für das pneumatische Betätigungselement (6) erstreckt.

## Claims

1. A motor vehicle (1) with a forward structure (2) comprising an air guiding device (5), which air guiding device (5) has a pneumatic actuating member (6) for displacing the air guiding device (5) from a rest position (Rs) into an operative position (Ws) and which air guiding device (5) has a spoiler lip (7) comprising an extensible and resilient material, wherein the pneumatic actuating member (6) is formed as an inflatable tube (10) which - seen in the direction of travel (Fr) - is arranged behind the spoiler lip (7) and wherein the resilient spoiler lip (7) in its rest position (Rs) lies under prestress against the forward structure, **characterised in that** the tube (10) - seen in the vehicle transverse direction (Fq) - is resiliently extensible and in cross-section is substantially non-extensible.

2. A motor vehicle according to claim 1, **characterised in that** the tube (10) has a plurality of chambers (13, 14, 15) which are arranged one above the other and which - seen counter to the direction of travel (Fr) - are arranged so as to be mutually offset.

3. A motor vehicle according to claim 1, **characterised in that** the air tube (10) - seen in cross-section - is drop-shaped, oval or circular.

4. A motor vehicle according to claim 2, **characterised in that** at least one of the chambers (13, 14, 15) - seen in cross-section - is drop-shaped, oval or circular.

5. A motor vehicle according to claim 2 or 4, **characterised in that** the chambers (13, 14, 15) - seen in cross-section - have different sizes.

6. A motor vehicle according to claim 5, **characterised in that** the chamber (13) lying adjacent to the spoiler lip (7) has the smallest cross-section.

7. A motor vehicle according to claim 5, **characterised in that** the chamber (15) lying adjacent to the forward structure (2) has the largest cross-section.

8. A motor vehicle according to claim 2, 4 or 5, **characterised in that** the chambers (13, 14, 15) have an air connection (17) between one another.

9. A motor vehicle according to claim 2, 4 or 5, **characterised in that** each chamber (13, 14, 15) is separately supplied with air.

10. A motor vehicle according to claim 2, 4, 5, 8 or 9, **characterised in that** the chambers (13, 14, 15) are fixed to one another or, by means of at least one material extension (18) of the chambers (13, 14, 15), are held one above the other under the forward structure (2).

11. A motor vehicle according to claim 1, **characterised in that** the spoiler lip (7) - seen in the vehicle transverse direction (Fq) - has spaced ventilation openings (22) for supplying air to the wheel brakes.

12. A motor vehicle according to claim 11, **characterised in that** the ventilation openings (22) are strengthened in their edge regions (23).

13. A motor vehicle according to claim 1, **characterised in that** the spoiler lip (7) has, at its free end (25), a pocket (26) in which is arranged a flexible member (24) which extends substantially over the entire width of the forward structure (2) and which is displaceable in the pocket (26) in the vehicle transverse direction (Fq).

14. A motor vehicle according to claim 1 or 13, **characterised in that** the forward structure (2) has a recess (9) which extends over the width of the forward structure (2) and in which the tube (10) and the spoiler lip (7) lie in the rest position (Rs).

15. A motor vehicle according to claim 1, 13 or 14, **characterised in that** the forward structure (2) - seen in the direction of travel (Fr) - is convex.

16. A motor vehicle according to claim 1, **characterised in that** the air guiding device (5) is arranged on the underside (8) of the forward structure (2).

17. A motor vehicle according to claim 1, **characterised in that** the air guiding device (5) is displaceable into the operative position (Ws) and back into the rest position (Rs) and vice versa as a function of the travelling speed of the motor vehicle (1).

18. A motor vehicle according to claim 1 or 2, **characterised in that** the spoiler lip (7) and the tube (10) or the chambers (13, 14, 15) are manufactured in one piece and thus form a prefabricated module (M).

19. A motor vehicle according to any one of the preceding claims 2 to 18, **characterised in that** at least one of the chambers (13, 14, 15) - seen in the vehicle transverse direction (Fq) - is resiliently extensible and in cross-section is substantially non-extensible.

20. A motor vehicle according to claim 1 or 16, **characterised in that** a protective member (27) for the pneumatic actuating member (6) extends between the rear surface (12) of the spoiler lip (7) and the underside (8) of the forward structure (2).

## Revendications

1. Véhicule automobile (1) avec une partie avant (2) comprenant un dispositif de conduction d'air (5), lequel dispositif de conduction d'air (5) présente un élément de commande (6) pneumatique, afin de déplacer le dispositif de conduction d'air (5) d'une position de repos (Rs) à une position active (Ws), et lequel dispositif de conduction d'air (5) présente une lèvre de spoiler (7) comprenant un matériau extensible et élastique, l'élément de commande (6) pneumatique étant conçu comme un flexible (10) gonflable et disposé derrière la lèvre de spoiler (7), vu dans le sens de marche (Fr), et la lèvre de spoiler (7) élastique s'appliquant dans sa position de repos (Rs) sous pré-tension sur la partie avant, **caractérisé en ce que** le flexible (10) est élastiquement extensible, vu dans le sens transversal du véhicule (Fq) et n'est pas conçu essentiellement extensible en section.

2. Véhicule automobile selon la revendication 1, **caractérisé en ce que** le flexible (10) présente plusieurs chambres (13, 14, 15) disposées les unes au-dessus des autres, qui sont disposées décalées les unes par rapport aux autres, vues dans le sens contraire au sens de marche (Fr).

3. Véhicule automobile selon la revendication 1, **caractérisé en ce que** le flexible d'air (10) est conçu avec une forme de goutte, ovale ou circulaire, vue en section.

4. Véhicule automobile selon la revendication 2, **caractérisé en ce qu'**au moins l'une des chambres (13, 14, 15) est conçue avec une forme de goutte, ovale ou circulaire, vue en section.

5. Véhicule automobile selon la revendication 2 ou 4, **caractérisé en ce que** les chambres (13, 14, 15) présentent une grandeur différente, vues en section.

6. Véhicule automobile selon la revendication 5, **caractérisé en ce que** la chambre (13) disposée à proximité de la lèvre de spoiler (7) présente la plus faible section.

7. Véhicule automobile selon la revendication 5, **caractérisé en ce que** la chambre (15) située à proximité de la partie avant (2) présente la plus grande section.

8. Véhicule automobile selon la revendication 2, 4 ou 5, **caractérisé en ce que** les chambres (13, 14, 15) présentent une liaison d'air (17) les unes par rapport aux autres.

9. Véhicule automobile selon la revendication 2, 4 ou 5, **caractérisé en ce que** chaque chambre (13, 14, 15) est alimentée séparément avec de l'air.

10. Véhicule automobile selon la revendication 2, 4, 5, 8 ou 9, **caractérisé en ce que** les chambres (13, 14, 15) sont fixées les unes aux autres ou sont maintenues par au moins un prolongement de matériau (18) des chambres (13, 14, 15) les unes au-dessus des autres sous la partie avant (2).

11. Véhicule automobile selon la revendication 1, **caractérisé en ce que** la lèvre de spoiler 7 présente des ouvertures d'aération (22) disposées à distance les unes des autres, vues dans le sens transversal du véhicule (Fq), pour l'arrivée d'air des freins de roue.

12. Véhicule automobile selon la revendication 11, **caractérisé en ce que** les ouvertures d'aération (22) sont renforcées dans leurs zones périphériques (23).

13. Véhicule automobile selon la revendication 1, **caractérisé en ce que** la lèvre de spoiler (7) présente sur son extrémité (25) libre une poche (26) dans laquelle est disposé un élément (24) élastique en flexion, s'étendant sensiblement sur la largeur totale de la partie avant (2), qui peut coulisser dans la poche (26) dans le sens transversal du véhicule (Fq).

14. Véhicule automobile selon la revendication 1 ou 13, **caractérisé en ce que** la partie avant (2) présente un évidement (9) s'étendant sur la largeur de la partie avant (2), dans lequel sont disposés le flexible et la lèvre de spoiler (7) dans la position de repos (Rs).

15. Véhicule automobile selon la revendication 1, 13 ou 14, **caractérisé en ce que** la partie avant (2) est incurvée, vue dans le sens de marche (Fr).

16. Véhicule automobile selon la revendication 1, **caractérisé en ce que** le dispositif de conduction d'air (5) est disposé sur le côté inférieur (8) de la partie avant (2).

17. Véhicule automobile selon la revendication 1, **caractérisé en ce que** le dispositif de conduction d'air (5) peut être déplacé en fonction de la vitesse de roulement du véhicule (1) dans la position active (Ws) et de retour dans la position de repos (Rs) et inversement.

18. Véhicule automobile selon la revendication 1 ou 2, **caractérisé en ce que** la lèvre de spoiler (7) et le flexible (10) ou les chambres (13, 14, 15) sont fabriqués d'une seule pièce et forment ainsi un module (M) préfabriqué.

19. Véhicule automobile selon l'une quelconque des revendications 2 à 18 précédentes, **caractérisé en ce qu'**au moins l'une des chambres (13, 14, 15) est conçue élastiquement extensible, vue dans le sens transversal du véhicule (Fq), et essentiellement non extensible en section.

20. Véhicule selon la revendication 1 ou 16, **caractérisé en ce qu'**un élément de protection (27) pour l'élément de commande (6) pneumatique s'étend entre le côté arrière (12) de la lèvre de spoiler (7) et le côté inférieur (8) de la partie avant (2).
